(19) Europäisches Patentamt
European Patent Office
Office européen des brevets

(11) **EP 1 397 262 B1**

(12) **FASCICULE DE BREVET EUROPEEN**

(45) Date de publication et mention
de la délivrance du brevet:
**06.03.2013 Bulletin 2013/10**

(21) Numéro de dépôt: **02750979.3**

(22) Date de dépôt: **24.05.2002**

(51) Int Cl.:
*B60C 9/02* (2006.01)   *B60C 13/00* (2006.01)
*B60C 9/09* (2006.01)

(86) Numéro de dépôt international:
**PCT/EP2002/005742**

(87) Numéro de publication internationale:
**WO 2002/096674 (05.12.2002 Gazette 2002/49)**

(54) **RENFORCEMENT DE FLANC D'UN PNEUMATIQUE RADIAL**

VERSTÄRKUNG VON EINER RADIALLUFTREIFENSEITENWAND

RADIAL TYRE SIDEWALL REINFORCEMENT

(84) Etats contractants désignés:
**AT BE CH CY DE DK ES FI FR GB GR IE IT LI LU MC NL PT SE TR**

(30) Priorité: **31.05.2001 FR 0107203**

(43) Date de publication de la demande:
**17.03.2004 Bulletin 2004/12**

(73) Titulaires:
• **COMPAGNIE GENERALE DES ETABLISSEMENTS MICHELIN**
 **63000 Clermont-Ferrand (FR)**
• **Michelin Recherche et Technique S.A.**
 **1763 Granges-Paccot (CH)**

(72) Inventeur: **BURLACOT, Laurence**
 **F-63200 Riom (FR)**

(74) Mandataire: **Diernaz, Christian**
 **M. F. P. Michelin,**
 **SGD/LG/PI-F35-Ladoux**
 **63040 Clermont-Ferrand Cedex 09 (FR)**

(56) Documents cités:
**US-A- 4 436 130    US-A- 4 438 796**
**US-A- 4 747 436**

**Description**

L'invention concerne le renforcement des pneumatiques et plus particulièrement le renforcement des pneumatiques à armature de carcasse radiale, c'est-à-dire à armature de carcasse dont les renforts sont contenus dans des plans radiaux contenant l'axe de rotation ou encore forment de petits angles avec ces plans radiaux. Elle s'applique à tous les types de pneumatiques mais plus spécialement aux pneumatiques destinés à rouler hors la route en terrain rocheux ou sur des pierres ou plus généralement sur des terrains accidentés et agressifs.

Comme connu dans l'état de la technique, un pneumatique radial comprend des régions dites de bourrelets, destinées à venir coopérer avec les sièges et rebords d'une jante de montage, ces bourrelets comprenant une structure de renforcement dans la direction circonférentielle à laquelle est ancrée l'armature de carcasse. Radialement à l'extérieur de l'armature de carcasse est disposée une armature de renforcement de sommet comportant au moins deux nappes dont le rôle est, entre autres, de réaliser un frettage de ladite armature de carcasse lors de la mise sous pression du pneumatique pour utilisation au dessus de ces bourrelets. Radialement à l'extérieur de l'armature de sommet est placée une bande de roulement portant une pluralité de reliefs formant la sculpture du pneumatique. Entre chaque bourrelet et chaque extrémité axiale du sommet, s'étend un flanc du pneumatique dont la fonction est d'assurer une liaison mécanique entre ledit bourrelet et ledit sommet tout en subissant de plus ou moins fortes flexions pendant le roulage.

Ces flexions conduisent à des déformations importantes liées aux fortes variations de courbure des flancs et lorsqu'un pneumatique est utilisé sur des terrains accidentés comportant de nombreuses aspérités ou obstacles, la combinaison des sollicitations peut être à l'origine de cassures des gommes de flanc voire de blessures de l'armature de carcasse. Pour pallier ce problème, il a été proposé d'ajouter aux flancs d'un pneumatique au moins une nappe de gomme renforcée de câbles, ces câbles faisant un angle non nul avec la direction radiale ou méridienne. Le document US 3,464,477 propose d'ajouter, dans chacun des flancs et sur le côté intérieur de l'armature de carcasse, un renforcement s'étendant de part et d'autre de la mi flanc et sur une fraction de la hauteur radiale dudit flanc. Cette solution très performante présente cependant un inconvénient lié au fait que compte tenu des hauteurs radiales de flanc, il est souvent difficile d'obtenir, sur le pneumatique, l'angle voulu des renforts, sans compter que ces renforts sont soumis à des contraintes préjudiciables à leur bonne tenue mécanique du fait même des courbures variables qu'ils subissent dans le pneumatique du fait des déformations des flancs.

Dans le document US 5,078,192, il est décrit une structure de pneumatique comprenant dans les flancs au moins une armature supplémentaire de renforcement destinée à protéger lesdits flancs des agressions pendant le roulage, cette armature de renforcement étant formée par enroulement dans la direction circonférentielle de bandelettes comprenant des éléments de renforts orientés circonférentiellement; dans ce document, les bandelettes sont disposées bord à bord dans une direction méridienne. Cette solution n'est pas sans poser de nombreux problèmes de fabrication puisqu'elle nécessite que les renforts orientés circonférentiellement soient déposés sur une ébauche de pneumatique déjà conformée.

Le besoin existe en conséquence d'une solution permettant le renforcement des pneumatiques destinés à rouler sur des terrains difficiles et ne présentant pas les inconvénients des solutions techniques de l'état de l'art rappelés ci-dessus et en particulier permettant de réaliser une conformation sous la forme d'un tore d'une ébauche de pneumatique réalisée sur tambour de fabrication.

Le brevet US 4,438,796 décrit une architecture d'un pneumatique prévu pour porter de lourdes charges (sur engins de génie civil notamment) selon laquelle l'un au moins des flancs comprend une armature supplémentaire de renforcement composée d'une ou plusieurs couches comportant des renforts inclinés ; dans une variante, il est précisé que chaque couche comprend une pluralité de bandes circonférentielles disjointes les unes des autres dans une même couche.

Le document US-A-4 953 605 décrit un pneumatique radial selon le préambule de la revendication 1.

Le pneumatique selon l'invention, destiné entre autre à un usage hors la route sur terrains agressifs, comprend un sommet renforcé par une armature de renforcement comprenant au moins deux nappes de gomme renforcées par des câbles ou fils croisés d'une nappe à la suivante et surmonté radialement d'une bande de roulement destinée à être en contact avec le sol, deux bourrelets destinés à être en contact avec des sièges d'une jante de montage, chaque bourrelet étant prolongé par un flanc comprenant une armature de carcasse radiale formée d'au moins une nappe de gomme renforcée par une pluralité de câble ou fils, cette armature de carcasse étant ancrée dans chaque bourrelet et s'étendant dans le sommet, ce pneumatique comprenant, dans au moins un flanc, une armature supplémentaire de renforcement formée de gomme et de renforts inclinés par rapport à la direction circonférentielle. Ce pneumatique est tel que :

● l'armature supplémentaire de renforcement de flanc comprend au moins deux groupements formé chacun d'au moins deux bandes s'étendant dans la direction circonférentielle,

● chaque bande, de largeur $L_i$ sensiblement égale ou supérieure à la largeur méridienne totale $L_t$ de l'armature supplémentaire divisée par le nombre total de bandes dans le groupement considéré, est formée de gomme renforcée par une pluralité de câbles ou fils inclinés d'un angle α compris entre 30° et 90°, cet angle étant mesuré sur le pneumatique neuf par rapport à la direction circonférentielle ;

● dans un même groupement, chaque bande circonférentielle est superposée partiellement avec une bande voisine de façon à éviter que les bandes soient disjointes entre elles et qu'il n'existe un espace entre deux bandes successives.

● Le chevauchement partiel d'une bande avec une bande voisine du même groupement est au plus égal à 40% de la largeur Li de cette bande.

Par bande voisine d'une autre bande dans un groupement, on entend une bande qui prolonge radialement cette autre bande avec chevauchement entre lesdites bandes.

Chaque bande Bi d'un même groupement est couplée, par chevauchement partiel, à sa ou ses bandes voisines dans ledit groupement pour former un écran sans faille à toute propagation d'une éventuelle cassure des mélanges de caoutchouc du flanc du pneumatique de l'extérieur du pneumatique vers l'intérieur.

Préférentiellement, la largeur des régions de chevauchement d'une bande d'un groupement avec chaque bande voisine du même groupement est au plus égale à 40% de la largeur de cette bande de manière à réaliser un couplage optimal tout en limitant les surépaisseurs dans le flanc.

La largeur totale Lt de l'armature supplémentaire de renforcement est mesurée sur le pneumatique neuf le long d'un profil méridien dudit pneumatique, obtenu dans un plan de coupe contenant l'axe de rotation du pneumatique, entre le point radialement le plus à l'intérieur et le point radialement le plus à l'extérieur de ladite armature.

Pour augmenter encore l'efficacité de protection des flancs du pneumatique par l'armature supplémentaire, il est judicieux de prévoir, entre chaque groupement, la présence d'un profilé en mélange de caoutchouc espaçant lesdits groupements; préférentiellement, le module à 10% d'allongement du mélange de caoutchouc composant ce profilé est 40% supérieur au module à 10% d'allongement des mélanges de caoutchouc des bandes formant les groupements.

Il a été constaté qu'un profilé de mélange entre les groupements ayant une épaisseur sensiblement supérieure au diamètre moyen des renforts des bandes circonférentielles, conduisait à des performances en agression encore améliorées.

En outre et pour obtenir une rigidité de flanc accrue et éviter les risques de décohésion entre l'armature de carcasse et l'armature supplémentaire de renforcement, il est judicieux de prévoir, entre ladite armature de carcasse et ladite armature supplémentaire, la présence d'une couche de découplage en mélange de caoutchouc. Ce mélange est préférentiellement choisi pour avoir un module à 10% d'allongement qui est inférieur au module à 10% d'allongement du mélange de l'armature de carcasse.

Associée à cette architecture de pneumatique, il est proposé un procédé de fabrication d'un tel pneumatique selon lequel après avoir réalisé deux bandes formées de mélange de caoutchouc renforcées par des renforts sensiblement parallèles les uns aux autres et faisant avec la direction longitudinale de la bande un angle moyen compris entre 30° et 90°, on dépose ces bandes par enroulement sur la partie de l'ébauche du pneumatique correspondant à l'un des flancs dudit pneumatique. Ce procédé peut être mis en oeuvre dans le cadre d'une confection sur un tambour suivie d'une conformation pour atteindre une forme sensiblement torique ou encore dans le cadre d'une confection directe sur un noyau ne nécessitant pas de phase de conformation.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une vue à plat d'un groupement de bandes composant un premier mode de réalisation d'une armature de renforcement supplémentaire de flanc selon l'invention;

La figure 2 montre une vue en coupe selon la ligne II-II de la figure 1;

La figure 3 montre une vue à plat d'une variante de groupement de bandes composant un deuxième mode de réalisation d'une armature de renforcement de flanc selon l'invention;

La figure 4 montre une vue en coupe selon la ligne IV-IV de la figure 3;

La figure 5 montre une variante de réalisation d'une bande avec un câble textile;

La figure 6 montre une coupe méridienne d'un pneumatique d'engin génie civil comprenant radialement à l'intérieur de l'armature de carcasse, une armature supplémentaire de renforcement des flancs formée de deux groupements de bandes selon l'invention;

La figure 7 montre en coupe et à plat (c'est-à-dire avant pose sur le pneumatique) l'empilement des deux groupements de bandes formant l'armature supplémentaire de renforcement du pneumatique montré à la figure 6.

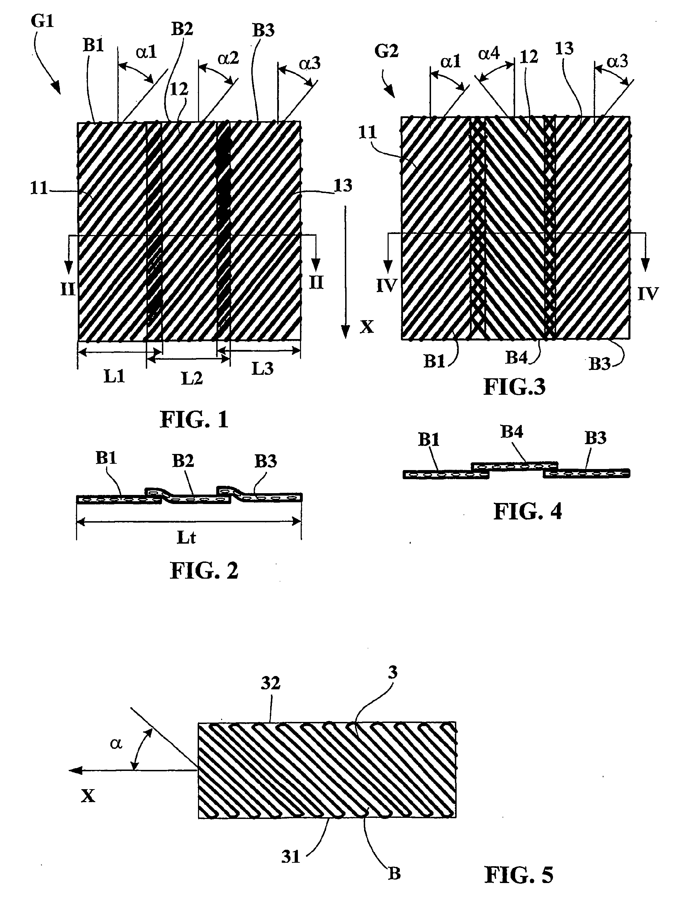

Sur la figure 1 est représentée une première variante d'un groupement G1 de trois bandes B1, B2, B3 de largeurs L1, L2, L3 sensiblement égales formant une armature supplémentaire de renforcement pour le renforcement d'un flanc de pneumatique. Les largeurs L1, L2, L3 sont, dans le cas présent, supérieures au tiers de la largeur totale Lt du groupement G1. Le groupement G1 est ici montré sur une forme cylindrique de confection avant incorporation dans un pneumatique.

Chaque bande B1, B2, B3 du groupement comprend une pluralité de câbles métalliques 11, 12, 13 disposés de manière parallèle les uns aux autres dans l'ensemble du groupement G1 pour faire des angles d'inclinaison $\alpha1, \alpha2, \alpha3$ sensiblement égaux à 45° dans l'exemple présenté (cet angle étant mesuré par rapport à la direction circonférentielle indiquée par la flèche X sur la figure). Dans le prolongement radial (correspondant sur cette figure 1 à une direction située dans le plan de cette figure et perpendiculaire à la direction repérée X), la bande B1 est partiellement couplée à la deuxième bande B2 qui est elle même couplée à la troisième bande B3 par recouvrement sur des largeurs appropriées et égales au plus à 40% de la largeur desdites bandes. Par appropriées, on entend des largeurs de recouvrement qui sont suffisantes pour qu'après conformation de l'ébauche de pneumatique les bandes B1, B2 et B3 se recouvrent encore.

La figure 2 montre, en coupe selon la ligne II-II, le groupement 1 de la figure 1 avant conformation de l'ébauche de pneumatique. La bande B3 recouvre partiellement la surface supérieure de la bande B2 tandis que cette dernière recouvre également la surface supérieure de la bande B1.

À la figure 3 il est montré une variante de réalisation d'un groupement G2 de trois bandes B1, B4, B3, les bandes B1 et B3 étant identiques à celles employées dans le groupement G1 montré avec la figure 1 tandis que la bande intermédiaire B4 comprend les mêmes renforts 12 que la bande B2 employés pour le groupement G1, mais ces renforts 12 sont ici inclinés selon un angle $\alpha4$ de même module mais de signe opposé au signe de l'angle $\alpha1, \alpha3$ des renforts 11 et 13 des bandes B1 et B3. En outre, et comme cela est visible sur la figure 4 montrant une coupe selon une ligne IV-IV de la figure 3, la bande intermédiaire B4 chevauche à ses deux extrémités, dans le sens de sa largeur, les deux bandes B1 et B3 sur des largeurs de recouvrement sensiblement égales. Les largeurs des trois bandes B1, B4, B3 sont ici encore identiques mais elles pourraient être différentes.

Dans les exemples montrés avec les figures 1 à 4, les angles des renforts de toutes les bandes sont sensiblement égaux au moins en module; toutefois, il est bien sûr possible de réaliser un groupement de plusieurs bandes, par exemple trois, pour lesquelles les angles $\alpha1, \alpha2, \alpha3$ d'inclinaison des renforts de chaque bande sont différents. Dans ce cas, il est avantageux que ces angles satisfassent la relation suivante :

$$\alpha1 > \alpha2 > \alpha3$$

l'angle $\alpha1$ correspondant à l'angle des renforts de la bande située au plus près de la zone de bourrelet du pneumatique avec la direction circonférentielle, l'angle $\alpha3$ correspondant à l'angle des renforts de la bande située au plus près de l'armature de sommet et l'angle $\alpha2$ correspondant à l'angle des renforts de la bande intermédiaire.

La solution selon laquelle l'angle des renforts des bandes de chaque groupement va en augmentant en allant des bandes près de la zone de bourrelet vers celles situées près du sommet du pneumatique est également possible sans toutefois présenter les mêmes avantages.

Ce qui a été dit concernant l'angle des renforts de chaque bande peut aussi s'appliquer aux largeurs moyennes de chaque bande : les exemples présentés montrent des bandes de largeurs identiques, il est bien sûr possible de prévoir des largeurs différentes selon les bandes et/ou selon les groupements et des largeurs de recouvrement également différents.

La variante de la figure 5 a trait au cas d'une bande B réalisée en effectuant un va et vient d'un câble préférentiellement textile 3 entre les deux bords 31 et 32 de ladite bande et disposé selon une inclinaison moyenne $\alpha$ comprise entre 30° et 90°, ladite inclinaison étant mesurée par rapport à la direction longitudinale de la bande (repérée par une flèche X sur la figure 5).

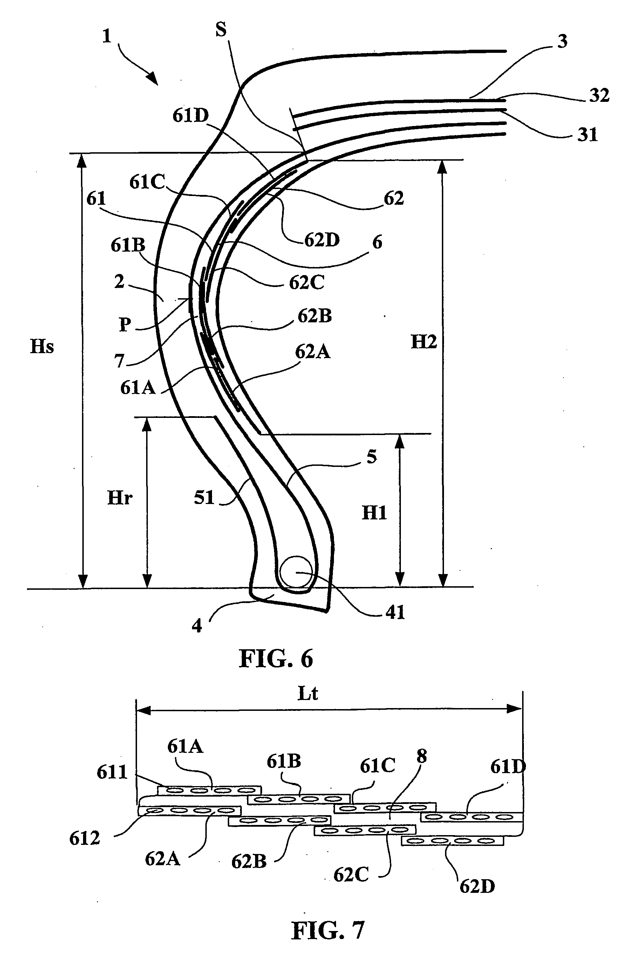

Sur la figure 6 est représentée une coupe, réalisée dans un plan méridien, d'une partie d'un pneumatique 1 de dimension 26.5 R 25 sur laquelle on distingue un flanc 2 s'étendant entre un sommet 3 pourvu d'une bande de roulement destinée à être en contact avec le sol pendant le roulage dudit pneumatique et un bourrelet 4 destiné à être en contact avec un siège d'une jante de montage.

Ce pneumatique comprend une armature de carcasse 5 s'étendant d'un bourrelet à l'autre, ladite armature 5 étant ancrée par retournement à des tringles 41 de renforcement circonférentiel présentes dans chaque bourrelet 4 pour former des retournements 51 de hauteur Hr égale à 245 mm, ladite hauteur étant mesurée radialement par rapport à la base de la tringle (diamètre intérieur de ladite tringle). L'armature de carcasse 5 est formée d'une nappe en mélange de caoutchouc renforcée par des câbles métalliques disposés de manière radiale, c'est-à-dire formant un angle voisin ou égal à 90° avec la direction circonférentielle.

Radialement à l'extérieur de l'armature de carcasse 5, une armature de sommet 3 comprend deux nappes 31 et 32 en mélange de caoutchouc renforcé par des renforts métalliques parallèles entre eux dans chaque nappe et croisés d'une nappe à l'autre (dans chaque nappe les renforts font un angle moyen de 24° avec la direction circonférentielle). Les projections S sur l'armature de carcasse des extrémités axiales du sommet sont situées radialement à une distance Hs égale à 435 mm de la base des tringles (lesdites projections sont faites perpendiculairement au profil de l'armature de carcasse 5).

En outre, chaque flanc 2 comprend axialement à l'intérieur de l'armature de carcasse une armature supplémentaire de renforcement 6 formée de deux groupements 61 et 62; chaque armature supplémentaire 6 s'étendant entre une hauteur H1 et une hauteur H2 (ces hauteurs étant mesurées par rapport à la base tringle 41), de part et d'autre du point P du flanc le plus à l'extérieur axialement sur une longueur méridienne totale Lt.

Il a été constaté qu'il était avantageux que H1 soit inférieur à Hr et que le rapport H2/Hs soit compris entre 0.6 et 0.9. Dans le cas présent : H1 = 220 mm et H2 = 347 mm.

Chaque groupement 61, 62 est formé de plusieurs bandes 61A, 61B, 61C, 61D et 62A, 62B, 62C, 62D qui, vues en coupe méridienne, ont chacune une largeur de 40 mm et qui se superposent les unes sur les autres sur une largeur moyenne de 10 mm comme cela est visible à la figure 7. Chaque bande 61A, 61B, 61C, 61D du groupement 61 est formée d'un mélange de caoutchouc renforcé par des renforts "NYLON" 611 parallèles entre eux dans chaque bande. Chaque bande 62A, 62B, 62C, 62D du groupement 62 est formée d'un mélange de caoutchouc renforcé par des renforts "NYLON" 612 parallèles entre eux dans chaque bande. À l'état d'ébauche, les renforts de toutes les bandes forment un angle moyen égal à 80°; après mise en forme de tore, l'angle moyen des renforts des bandes situées radialement le plus près des bourrelets est en moyenne égal à 75° et celui des renforts des bandes situées radialement le plus près du sommet est en moyenne égal à 65°.

Les renforts des bandes d'un même groupement présentent des inclinaisons de même sens par rapport à la direction circonférentielle. D'un groupement à l'autre les inclinaisons des renforts sont de signes opposés. Le mélange de caoutchouc 8 présent entre les groupements améliore l'effet de découplage entre lesdits groupements ; plus précisément, le mélange de caoutchouc a un module d'extension à 10% de déformation supérieur au module d'extension à 10% du mélange de caoutchouc d'enrobage des renforts des bandes et préférentiellement à au moins 30% (dans le cas présent, le rapport des modules est égal à 1.4 et l'épaisseur moyenne est de 2 mm tandis que le diamètre moyen des renforts des bandes est de 1 mm).

Dans l'exemple présenté, les valeurs des angles des renforts des bandes formant les groupements sont identiques mais il est bien sûr possible d'employer des angles différents.

Entre l'armature de carcasse 5 et l'armature supplémentaire 6 de renfort flanc, on trouve une couche 7 de mélange de caoutchouc d'épaisseur moyenne 5 mm et de module à 10% d'allongement 40% inférieur au module du mélange de l'armature de carcasse.

Pour réaliser un tel pneumatique, on procède de la manière suivante :

- pose du mélange de gomme interne sur un tambour de confection d'une ébauche de pneumatique;

- confection d'une bande en mélange de caoutchouc renforcée par des renforts inclinés par rapport à la direction longitudinale de ladite bande d'un angle approprié;

- pose par enroulement de la bande obtenue à l'étape précédente sur le mélange de gomme interne en effectuant un nombre de tours approprié pour réaliser la largeur totale d'un groupement tout en réalisant un chevauchement partiel de chaque tour de ladite bande sur le tour précédent ;

- répétition de l'étape précédente autant de fois que nécessaire pour former le ou les autres groupement(s) en tenant compte de l'orientation des angles des renforts de chaque autre groupement;

- pose de l'armature de carcasse et des autres constituants nécessaires ;

- conformation de cette première ébauche afin d'obtenir une forme torique avant la pose d'une armature de sommet et d'une bande de roulement;

- moulage et vulcanisation de l'ébauche ainsi réalisée.

Entre les étapes de réalisation des différents groupements, il est possible de poser également par enroulement une épaisseur d'un mélange de caoutchouc jouant le rôle de découplage entre lesdits groupements.

Ce même procédé pourrait se décliner dans le cas d'une réalisation de l'ébauche de pneumatique ne nécessitant pas de conformation, notamment dans le cas d'une fabrication sur un noyau ayant sensiblement la forme de l'intérieur du pneumatique moulé. Dans ce dernier cas, après avoir déposé les mélanges internes sur le noyau, on dépose chaque groupement directement sur ces mélanges internes, soit par enroulement d'une unique bande sur plusieurs tours, soit par enroulement d'une pluralité de bandes ayant sensiblement la longueur d'un tour (dans ce dernier cas, il est avantageux de distribuer de manière régulière sur toute la circonférence les points de départ de chaque bande de manière à éviter une grande concentration pouvant être à l'origine d'irrégularité de roulage).

L'invention n'est pas limitée aux exemples décrits et représentés et diverses modifications peuvent y être apportées sans sortir de son cadre.

## Revendications

**1.** Pneumatique radial (1) comprenant un sommet renforcé par une armature de renforcement (3) comprenant au moins deux nappes (31, 32) de gomme renforcées par des câbles ou fils croisés d'une nappe à la suivante et surmonté radialement d'une bande de roulement destinée à être en contact avec le sol, deux bourrelets (4) destinés à être en contact avec des sièges d'une jante de montage, chaque bourrelet étant prolongé par un flanc (2) comprenant une armature de carcasse (5) radiale formée d'au moins une nappe de gomme renforcée par une pluralité de câble ou fils, cette armature de carcasse (5) s'étendant dans le sommet et ancrée dans chaque bourrelet (4) à au moins un élément (41) inextensible dans la direction circonférentielle, ce pneumatique (1) comprenant, dans au moins un flanc (2), une armature supplémentaire de renforcement (6) formée de gomme et de renforts inclinés par rapport à la direction circonférentielle, ce pneumatique étant tel que, vue en coupe méridienne, :

● l'armature supplémentaire de renforcement (6) comprend au moins deux groupements (61, 62) formé chacun d'au moins deux bandes (61A, 61B, 61C, 61D, 62A, 62B, 62C, 62D) s'étendant dans la direction circonférentielle,
● chaque bande (61A, 61B, 61C, 61D, 62A, 62B, 62C, 62D), de largeur Li sensiblement égale ou supérieure à la largeur totale Lt de l'armature divisée par le nombre total de bandes dans le groupement considéré, est formée de gomme renforcée par une pluralité de câbles ou fils (611, 612) inclinés d'un angle $\alpha$ compris entre 30° et 90°, cet angle étant mesuré sur le pneumatique neuf par rapport à la direction circonférentielle,
● dans un même groupement, chaque bande circonférentielle est superposée partiellement avec une bande voisine de façon à éviter que les bandes soient disjointes entre elles, ce pneumatique étant **caractérisé en ce que** :

● le chevauchement partiel d'une bande avec une bande voisine du même groupement est au plus égal à 40% de la largeur Li de cette bande.

2. Pneumatique radial (1) selon la revendication 1 **caractérisé en ce que** chaque armature supplémentaire de renforcement (6) s'étend de part et d'autre du point P du flanc le plus à l'extérieur axialement.

3. Pneumatique radial (1) selon l'une quelconque des revendications 1 ou 2 **caractérisé en ce qu'**entre chaque groupement est placé un mélange de caoutchouc de découplage et ayant une épaisseur au moins égale au diamètre moyen des renforts des bandes formant lesdits groupements.

4. Pneumatique radial (1) selon la revendication 3 **ca-**

**ractérisé en ce que** le module d'extension à 10% d'allongement du mélange de découplage est supérieur au module d'extension à 10% d'allongement du mélange d'enrobage des renforts des bandes.

5. Pneumatique radial (1) selon la revendication 4 **caractérisé en ce que** le module d'extension à 10% d'allongement du mélange de découplage est supérieur d'au moins 30% au module d'extension à 10% d'allongement du mélange d'enrobage des renforts des bandes.

6. Pneumatique radial (1) selon l'une quelconque des revendications 1 à 5 **caractérisé en ce que**, sur le pneumatique et d'une bande à sa suivante dans le sens allant du bourrelet vers le sommet, l'angle des renforts desdites bandes va en diminuant.

7. Pneumatique radial (1) selon l'une quelconque des revendications 1 à 5 **caractérisé en ce que**, sur le pneumatique et d'une bande à sa suivante dans le sens allant du bourrelet vers le sommet, l'angle des renforts desdites bandes va en augmentant.

8. Pneumatique radial (1) selon l'une quelconque des revendications 1 à 7 **caractérisé en ce que** chaque groupement de l'armature de renforcement supplémentaire (6) de flanc comprend des bandes formées de câbles ou fils inclinés dans un même sens par rapport à un plan radial, les groupements de l'armature de renforcement ayant leurs renfort croisés d'un groupement au suivant.

9. Pneumatique radial (1) selon l'une des revendications 1 à 5 **caractérisé en ce que**, dans un même groupement, l'angle d'inclinaison des renforts d'une bande est de signe opposé à l'angle d'inclinaison des renforts de ses voisines.

10. Pneumatique radial (1) selon l'une quelconque des revendications 1 à 9 **caractérisé en ce que** les renforts des bandes sont de nature textile et sont posés sur chaque bande selon un procédé de dépose par va et vient entre un bord latéral de ladite bande et le bord latéral opposé selon un angle moyen $\alpha$ compris entre 30° et 90°.

11. Pneumatique radial (1) selon l'une des revendications 1 à 8 ou selon la revendication 10 **caractérisé en ce qu'**au moins un groupement est formé à partir d'une même bande continue enroulée sur plusieurs tours.

12. Pneumatique radial (1) selon l'une des revendications 1 à 11 **caractérisé en ce que** l'armature de renforcement (6) est disposée radialement à l'intérieur de l'armature de carcasse (5) dans l'un au moins des flancs et **en ce qu'**une couche de mélange de caoutchouc (7) sépare ladite armature de carcasse de l'armature de renforcement, ledit mélange de caoutchouc ayant un module à 10% d'allongement qui est inférieur au module à 10% d'allongement du mélange de caoutchouc de l'armature de carcasse.

**Claims**

1. Radial tyre (1) comprising a crown reinforced by a reinforcement (3) comprising at least two plies (31, 32) of rubber reinforced by cables or wires crossed from one ply to the next and surmounted radially by a tread designed to be in contact with the ground, two beads (4) designed to be in contact with seats of a mounting rim, each bead being extended by a sidewall (2) comprising a radial carcass reinforcement (5) formed of at least one ply of rubber reinforced by a plurality of cables or wires, the said carcass reinforcement (5) extending into the crown and being anchored in each bead (4) to at least on element (41) that is inextensible in the circumferential direction, the said tyre (1) comprising in at least one sidewall (2) a supplementary reinforcement (6) formed of rubber and reinforcing elements inclined relative to the circumferential direction, the tyre being such that, when viewed in meridian cross-section:

   ● the supplementary reinforcement (6) comprises at least two groups (61, 62) each formed of at least two strips (61A, 61B, 61C, 61D, 62A, 62B, 62C, 62D) that extend in the circumferential direction;
   ● each strip (61A, 61B, 61C, 61D, 62A, 62B, 62C, 62D), of width Li essentially equal to or greater than the total width Lt of the reinforcement divided by the total number of strips in the group concerned, is formed of rubber reinforced by a plurality of cables or wires (611, 612) inclined at an angle $\alpha$ between 30° and 90°, the said angle being measured on a new tyre relative to the circumferential direction;
   ● within any one group, each circumferential strip is superimposed partially over an adjacent strip, to avoid gaps between the strips, this tyre being **characterised in that**

   ● the partial overlap of a strip with an adjacent strip in the same group is at most equal to 40% of the said strip's width Li.

2. Radial tyre (1) according to Claim 1, **characterised in that** each supplementary reinforcement (6) extends on either side of the point P of the sidewall which is axially outermost.

3. Radial tyre (1) according to Claim 1 or to Claim 2, **characterised in that** between each group is positioned a de-coupling rubber mixture whose thickness is at least equal to the average diameter of the reinforcements in the strips forming the said groups.

4. Radial tyre (1) according to Claim 3, **characterised in that** the tensile modulus at 10% elongation of the de-coupling mixture is higher than the tensile modulus at 10% elongation of the mixture coating the reinforcements of the strips.

5. Radial tyre (1) according to Claim 4, **characterised in that** the tensile modulus at 10% elongation of the de-coupling mixture is at least 30% higher than that of the mixture coating the reinforcements of the strips.

6. Radial tyre (1) according to any of Claims 1 to 5, **characterised in that** in the tyre, and from one strip to the next proceeding in the direction from the bead towards the crown, the angle of the reinforcements in the said strips decreases progressively.

7. Radial tyre (1) according to any of Claims 1 to 5, **characterised in that** in the tyre, and from one strip to the next proceeding in the direction from the bead towards the crown, the angle of the reinforcement in the said strips increases progressively.

8. Radial tyre (1) according to any of Claims 1 to 7, **characterised in that** each group in the supplementary sidewall reinforcement (6) comprises strips formed of cables or wires inclined in the same direction relative to a radial plane, the groups of the reinforcement having their reinforcing elements crossed from one group to the next.

9. Radial tyre (1) according to any of Claims 1 to 5, **characterised in that** within a given group the angle of inclination of the reinforcements in a strip is of opposite sign to the angle of inclination of the reinforcements in its neighbouring strips.

10. Radial tyre (1) according to any of Claims 1 to 9, **characterised in that** the reinforcements of the strips are of textile nature and are positioned in each strip by means of a back and forth positioning process between a lateral edge of the said strip and the opposite lateral edge, at an average angle $\alpha$ between 30° and 90°.

11. Radial tyre (1) according to any of Claims 1 to 8 or according to Claim 10, **characterised in that** at least one group is formed from a single continuous strip wound in several turns.

12. Radial tyre (1) according to any of Claims 1 to 11, **characterised in that** the reinforcement (6) is arranged radially on the inside of the carcass reinforcement (5) in at least one sidewall, and a layer of rubber mixture (7) separates the said carcass reinforcement from the said reinforcement, the said rubber mixture having a modulus at 10% elongation that is lower than the modulus at 10% elongation of the rubber mixture of the carcass reinforcement.

**Patentansprüche**

1.  Radialreifen (1) mit einem Scheitel, der durch eine Verstärkungsbewehrung (3), die mindestens zwei durch sich von einer Lage zur nächsten kreuzende Kabel oder Drähte verstärkte Gummilagen (31, 32) enthält, verstärkt wird und über dem radial ein Laufstreifen liegt, der dazu bestimmt ist, mit dem Boden in Kontakt zu sein, mit zwei Wülsten (4), die dazu bestimmt sind, mit Sitzen einer Montagefelge in Kontakt zu sein, wobei jeder Wulst durch eine Flanke (2) verlängert wird, die eine radiale Karkassenbewehrung (5) enthält, welche von mindestens einer durch eine Vielzahl von Kabeln oder Drähten verstärkten Gummilage geformt wird, wobei diese Karkassenbewehrung (5) sich in den Scheitel erstreckt und in jedem Wulst (4) an mindestens einem in Umfangsrichtung nicht dehnbaren Element (41) verankert ist, wobei dieser Reifen (1) in mindestens einer Flanke (2) eine zusätzliche Verstärkungsbewehrung (6) enthält, die aus Gummi und bezüglich der Umfangsrichtung geneigten Verstärkungen geformt wird, wobei dieser Reifen so ist, dass im Meridianschnitt gesehen:

    ● die zusätzliche Verstärkungsbewehrung (6) mindestens zwei Gruppierungen (61, 62) enthält, die je von mindestens zwei Streifen (61A, 61B, 61C, 61D, 62A, 62B, 62C, 62D) geformt werden, welche sich in Umfangsrichtung erstrecken,
    ● jeder Streifen (61A, 61B, 61C, 61D, 62A, 62B, 62C, 62D), einer Breite Li im Wesentlichen gleich der oder größer als die Gesamtbreite Lt der Bewehrung dividiert durch die Gesamtanzahl von Streifen in der betreffenden Gruppierung, aus Gummi geformt wird, der durch eine Vielzahl von Kabeln oder Drähten (611, 612) verstärkt wird, die um einen zwischen 30° und 90° liegenden Winkel α geneigt sind, wobei dieser Winkel am neuen Reifen bezüglich der Umfangsrichtung gemessen wird,
    ● in der gleichen Gruppierung jeder Umfangsstreifen teilweise mit einem benachbarten Streifen überlagert ist, um zu vermeiden, dass die Streifen voneinander getrennt werden,

    wobei dieser Reifen **dadurch gekennzeichnet ist, dass**:

    ● die teilweise Überlappung eines Streifens mit einem benachbarten Streifen der gleichen Gruppierung höchstens gleich 40% der Breite Li dieses Streifens ist.

2.  Radialreifen (1) nach Anspruch 1, **dadurch gekennzeichnet, dass** jede zusätzliche Verstärkungsbewehrung (6) sich zu beiden Seiten des axial am weitesten außen liegenden Punkts P der Flanke erstreckt.

3.  Radialreifen (1) nach einem der Ansprüche 1 oder 2, **dadurch gekennzeichnet, dass** zwischen jeder Gruppierung eine Entkopplungs-Kautschukmischung angeordnet ist, die eine Dicke mindestens gleich dem mittleren Durchmesser der Verstärkungen der die Gruppierungen formenden Streifen hat.

4.  Radialreifen (1) nach Anspruch 3, **dadurch gekennzeichnet, dass** der Dehnungsmodul bei 10% Längung der Entkopplungsmischung größer als der Dehnungsmodul bei 10% Längung der Umhüllungsmischung der Verstärkungen der Streifen ist.

5.  Radialreifen (1) nach Anspruch 4, **dadurch gekennzeichnet, dass** der Dehnungsmodul bei 10% Längung der Entkopplungsmischung um mindestens 30% größer als der Dehnungsmodul bei 10% Längung der Umhüllungsmischung der Verstärkungen der Streifen ist.

6.  Radialreifen (1) nach einem der Ansprüche 1 bis 5, **dadurch gekennzeichnet, dass** auf dem Reifen und von einem Streifen zum nächsten in der Richtung vom Wulst zum Scheitel der Winkel der Verstärkungen der Streifen abnimmt.

7.  Radialreifen (1) nach einem der Ansprüche 1 bis 5, **dadurch gekennzeichnet, dass** auf dem Reifen und von einem Streifen zum nächsten in der Richtung vom Wulst zum Scheitel der Winkel der Verstärkungen der Streifen zunimmt.

8.  Radialreifen (1) nach einem der Ansprüche 1 bis 7, **dadurch gekennzeichnet, dass** jede Gruppierung der zusätzlichen Flankenverstärkungsbewehrung (6) Streifen enthält, die von in der gleichen Richtung bezüglich einer radialen Ebene geneigten Kabeln oder Drähten geformt werden, wobei die Verstärkungen der Gruppierungen der Verstärkungsbewehrung sich von einer Gruppierung zur nächsten kreuzen.

9.  Radialreifen (1) nach einem der Ansprüche 1 bis 5, **dadurch gekennzeichnet, dass** in der gleichen Gruppierung der Neigungswinkel der Verstärkungen eines Streifens das entgegengesetzte Vorzeichen zum Neigungswinkel der Verstärkungen seiner Nachbarn hat.

10. Radialreifen (1) nach einem der Ansprüche 1 bis 9, **dadurch gekennzeichnet, dass** die Verstärkungen der Streifen von textiler Beschaffenheit sind und auf jedem Streifen gemäß einem Verlegeverfahren durch Hin- und Herbewegung zwischen einem Seitenrand des Streifens und dem gegenüberliegenden Seitenrand gemäß einem mittleren Winkel $\alpha$ zwischen 30° und 90° verlegt werden.

11. Radialreifen (1) nach einem der Ansprüche 1 bis 8 oder Anspruch 10, **dadurch gekennzeichnet, dass** mindestens eine Gruppierung ausgehend von dem gleichen durchgehenden Streifen geformt wird, der mehrfach gewickelt ist.

12. Radialreifen (1) nach einem der Ansprüche 1 bis 11, **dadurch gekennzeichnet, dass** die Verstärkungsbewehrung (6) radial im Inneren der Karkassenbewehrung (5) in mindestens einer der Flanken angeordnet ist, und dass eine Schicht einer Kautschukmischung (7) die Karkassenbewehrung von der Verstärkungsbewehrung trennt, wobei die Kautschukmischung einen Modul bei 10% Längung hat, der geringer als der Modul bei 10% Längung der Kautschukmischung der Karkassenbewehrung ist.

FIG. 1

FIG. 2

FIG.3

FIG. 4

FIG. 5

**FIG. 6**

**FIG. 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3464477 A
- US 5078192 A
- US 4438796 A
- US 4953605 A